Europäisches Patentamt

(19) European Patent Office    (11) Publication number: **0 201 241**
Office européen des brevets    **B1**

## (12) EUROPEAN PATENT SPECIFICATION

(45) Date of publication of the patent specification:
29.08.90

(21) Application number: 86303086.2

(22) Date of filing: 24.04.86

(51) Int. Cl.⁵: **C03C 8/14**

(54) **Ceramic paint composition.**

(30) Priority: 29.04.85 US 728646

(43) Date of publication of application:
**17.12.86 Bulletin 86/46**

(45) Publication of the grant of the patent:
**29.08.90 Bulletin 90/35**

(84) Designated Contracting States:
**DE FR GB**

(56) References cited:
**FR-A- 2 237 847
GB-A- 2 072 159**

**CHEMICAL ABSTRACTS, vol. 98, no. 19, 10th
November 1983, page 298, abstract no. 184410m,
Columbus, Ohio, US; & JP-A-57 191 253 (TOSHIBA
GLASS K.K.) 25-11-1982**

(73) Proprietor: **FORD MOTOR COMPANY LIMITED, Eagle
Way, Brentwood Essex CM13 3BW(GB)**
(84) Designated Contracting States: **GB**

(73) Proprietor: **FORD-WERKE AKTIENGESELLSCHAFT,
Ottoplatz 2 Postfach 21 03 69, D-5000 Köln 21(DE)**
(84) Designated Contracting States: **DE**

(73) Proprietor: **FORD FRANCE SOCIETE ANONYME,
344 Avenue Napoléon Bonaparte B.P. 307, F-92506 Ruell
Malmaison Cedex(FR)**
(84) Designated Contracting States: **FR**

(72) Inventor: **Boaz, Premakaran Tucker, 16842 Yorkshire,
Livonia Michigan 48154(US)**

(74) Representative: **Messulam, Alec Moses et al, A.
Messulam & Co. 24 Broadway, Leigh on Sea Essex
SS9 1BN(GB)**

## Description

This invention relates to a new ceramic paint composition. The ceramic paint composition is one which does not stick to fiberglass materials at elevated temperatures when the fiberglass is brought into contact therewith. A method of forming a glass sheet is disclosed which allows a ceramic painted glass sheet to be contacted by a fiberglass covered forming die which forms the glass in a heated condition into a desired shape. The forming operation may be carried out without any sticking of the new ceramic paint composition to the fiberglass forming die.

Ceramic paint compositions are generally well known to the skilled artisan. These ceramic paint compositions can be used, for example, to form borders around the edge of glass sheets which are used as windshields, sidelites or backlites in motor vehicle.

Such ceramic paints usually include a mixture of metal oxides which together act as a coloring agent for the ceramic paint. The metal oxides are nonreactive with one another and nonreactive with any elements or compounds they come in contact with while being heated to temperaturs up to about 704°C. The mixture of metal oxides can be controlled so as to get a selected color from the ceramic paint composition. Normally in automotive applications, the selected color is black.

Such ceramic paint compositions also include a low melting point glass frit which generally melts at a temperature below 704°C. The low melting point glass frit is the material which bonds the mixture of metal oxides to a glass sheet and ensures that it remains after the glass sheet has been cooled back to room temperature. A vehicle is normally mixed with the metal oxides and low melting point glass to allow the ceramic paint composition to be applied in a paint application process. For example, if the paint application process is a silk screen printing operation, the vehicle may be an organic medium which forms the vehicle for carrying the other materials during the silk screen printing operation.

Many different types of ceramic paint compositions of the above general type are well known to skilled artisans. The exact metal oxides and low melting point glass frit and vehicle selected for such paints is well within the skill of artisans in this area. The manner in which the different materials may be varied in order to achieve the results desired in a particular application is again well within the skill of an artisan.

However, it is found that in the situation where a sheet having a ceramic paint thereon was contacted by a fiberglass forming die that ceramic paints of the above described general composition had a great tendency to stick on the fiberglass covered die. It is, of course, obvious that the sheet of glass has to be heated to an elevated temperature, generally less than 704°C (1300°F) so that it may be engaged by a forming die and formed into a configuration other than flat.

Thus, the difficulty arose that the ceramic paint compositions generally known to skilled artisans would not operate in a glass forming process in which a heated glass sheet containing the ceramic paint composition was engaged by a fiberglass covered forming die. No other materials are known for covering the forming die because the fiberglass is the only material which will withstand the heat and rigorous requirements of the environment to which it is subjected. Other materials that have been used to cover forming dies quickly break down and wear out when repeatedly brought into engagement with the surface of a heated glass sheet. Thus, fiberglass is the material which is used to cover forming dies and this material unfortunately sticks to the ceramic paint compositions known to skilled artisans when those compositions are heated to an elevated temperature necessary in order to form glass by a forming die.

Thus, a problem was one of developing a ceramic paint composition which could withstand high temperatures and repeated engagements of painted glass sheets by a forming die without paint sticking to the forming die. This problem has been solved by the addition of a material to the ceramic paint composition which provides for a nonstick barrier between the heated ceramic paint composition on a heated glass sheet and a fiber glass forming die coming into contact therewith.

GB-A 2 072 159 discloses a method of forming a glass sheet with a colour coating thereon which comprises applying a colouring agent and glass frit onto a flat glass sheet, heating the glass shet and press bending by a shaping tool the heat-softened glass sheet. The colouring agent includes alumina which prevents the shaping tool from adhering to the fused layer of the colouring agent.

According to the present invention there is provided a ceramic paint composition comprising a mixture of metal oxides which together act as a coloring agent for the ceramic paint and, a low melting point glass frit, characterised in that said metal oxides are non reactive with one another and nonreactive with any elements or compounds they come in contact with while being heated to a temperature in a range up to 704°C and in that an additional metal oxide powder is included into the composition, said metal oxide powder having at least a low valence oxidation state and a high valence oxidation state, being in its low valence oxidation state when formed into the ceramic paint and being present in said composition in an amount of 5-25% of weight of the paint composition, said composition being formed with or without a vehicle.

There may be some metal oxides in the mixture of metal oxides which also have two or more valence oxidation states. However, because of the way the mixture of metal oxides is made, such metal oxides are oxidized to their highest valence states prior to being formed into the mixture and thus they are nonreactive with one another and nonreactive with any elements or compounds they come in contact with while being heated to temperatures in a range up to 704°C. It is of course, readily apparent that if the mixture of metal oxides had the same characteristics as the metal oxide powder, the ceramic paint compositions known in the prior art would have nonstick characteristics but, in fact, they do not. Thus, the mixture of metal oxides is not of the type defined herein as the metal oxide powder added to the ceramic paint composition.

Further details of the ceramic paint composition will be set out in a later portion of this specification dealing with the Best Mode and Industrial Applicability of my invention.

This composition can be used in a method of forming a glass sheet with a ceramic paint thereon.

In accordance with the teachings of the use of this ceramic paint composition, the following steps are carried out. The ceramic paint is applied to a glass shet. The ceramic paint includes the metal oxide powder having at least a low valence oxidation state and a high valence oxidation state, the metal oxide included in the ceramic paint being in its low valence state when applied. The remainder of the ceramic paint may be made up as known by skilled artisans from metal oxides which together act as coloring agents for the ceramic paint, those metal oxides being nonreactive with one another and nonreactive with any elements or compounds they come in contact with while being heated to temperatures of up to 704°C (1300°F). The ceramic paint, in addition, includes a low melting point glass frit and a vehicle needed to transport the other remaining materials so that they may be applied to the glass sheet.

After the application of the ceramic paint, the glass sheet is heated to a temperature which softens the glass sheet sufficiently so that the glass can be formed. The glass sheet and the ceramic paint thereon are then engaged with a fiberglass covered forming die to form the heated glass sheet to a desired shape.

After shaping, the forming die is removed from engagement with the glass sheet, the metal oxide addition to the ceramic paint being effective to prevent sticking of any of the ceramic paint to the forming die. The glass sheet is cooled to obtain a formed glass sheet with a ceramic paint thereon.

In accordance with the teaching of this invention, a ceramic paint composition comprises the following materials. The first material is a mixture of metal oxides which together act as a coloring agent for the ceramic paint. These metal oxides, because of their manufacturing process, are normally all in their highest oxidation state. A small proportion of the metal oxides may have a lower valence state simply because of manufacturing variability. However, normally the mixture of metal oxides used as a coloring agent is in its highest oxidation state because of the manufacturing process, and thus the mixture of metal oxides is nonreactive with one another and nonreactive with any elements or compounds they come in contact with while being heated to temperatures in a range up to 1300°F.

The nonreactive oxides generally include oxides of material such as chrome, cobalt, nickel, manganese, iron and copper. Such a mixture is commonly known as black oxide powder and is well known in the industry. Any oxide included in this material is normally in its highest valence oxidation state because of the process of manufacture and because those who are purchasing the black oxide powder mixture desire a material which does not react when heated to moderate temperatures. Other mixtures of oxides may be put together in order to get different colors, as is well known in the industry. In normal practice, the mixture of nonreactive metal oxides makes up about 8-25% by weight of the ceramic paint composition, preferably 10-20% by weight, and most preferably 16% by weight.

A second material forming the ceramic paint composition is a low melting point glass frit. Normally, the low melting point glass frit is a lead borosilicate glass frit high in lead content. Any other low melting point glass frit is also suitable, but the lead borosilicate glass is preferred because it is readily available and relatively cheap. This material is included in a range of 30-50% by weight.

In accordance with the teachings of the method of using the ceramic paint of this invention, a metal oxide powder having at least a low valence oxidation state and a high valence oxidation state is also included. In accordance with the teachings of the preferred embodiment, the material used is stannous oxide and it is used in a 5-25% by weight amount in the composition, preferably 10-20% by weight, and most preferably 17% by weight. However, other metal oxides, or mixtures thereof, having at least two valence states may be used. However, when the metal oxide is used, it is incorporated into the ceramic paint in its low valence oxidation state. For example, if iron oxide was used, it would be included as ferrous oxide. Similarly, if copper powder was used, it would be included as cupprous oxide. Similarly, with other metals having more than two valence states, they would be included in their lower metal oxidation state.

A vehicle may be mixed with the metal oxides, the low melting point glass frit, and the metal oxide powder having at least two valence states to form all of the mentioned materials into a ceramic paint which can be applied to a glass surface. For example, if the ceramic paint is to be applied in a silk screen printing operation, a UV curable organic medium may be used. This organic medium would make up 20-35% by weight of a paint composition.

However, if electrostatic means were being used to apply the ceramic paint composition, no vehicle would be necessary as the electrostatic application would not require the same. In other operations, for example, water might be the vehicle in order to make a ceramic paint in a water slurry. Such a paint may be applied by a process of air or airless spray system. Other materials which may be used are known to the artisans, for example, pine oil and other organic vehicles.

The whole thing that makes the ceramic paint composition of this invention nonstickable is the metal oxide powder having at least a low valence oxidation state and a high valence oxidation state being present in the composition in its low valence oxidation state. It is believed that when this metal oxide powder is subjected to a heating operation, that portion of the powder on the upper surface of the ceramic paint composition readily oxidizes to form an excellent, fully oxidized metal oxide barrier across the top surface of the paint which insulates the low melting point glass frit and isolates the same from the fiberglass cloth. Thus, the fiberglass cloth, while contacting the surface, does not adhere to the ceramic paint and the paint does not stick to the cloth.

As previously stated, ceramic paint compositions are well known in the art and general details thereof have been set forth above. Commercial compositions are available through Drakenfeld as 24-2247 and 24-2279. Also, Ferro Company makes a ceramic paint composition which is marketed under their number 3501. These paint compositions are made generally as described above, but these are materials which are avilable. If one adds to these compositions a metallic oxide powder having at least a low valence oxidation state and a high valence oxidation state in its low valence oxidation state at the levels indicated above, namely, 5–25% of the total weight thereof, these standardly available ceramic paint compositions will also be nonstickable to fiberglass covered surfaces in glass forming operations.

In accordance with the use of the ceramic paint of this invention, a method of forming a glass sheet with a ceramic paint thereon is as follows. This process is disclosed in EP-A 0 200 475. The method has the following steps. The ceramic paint is applied to the glass sheet. The ceramic paint includes a mixture of metal oxides which together act as a coloring agent for the ceramic paint. The metal oxides are oxides which are nonreactive with one another and nonreactive with any elements or compounds they come in contact with while being heated to temperatures up to 1300°F (704°C). A low melting point glass frit is also included in the ceramic paint composition. A principal ingredient from a functional standpoint in achieving nonstick capabilities for the ceramic paint is a metal oxide powder having at least a low valence oxidation state and a high valence oxidation state. As fully discussed above, the metal oxide is included in its low valence state in the ceramic paint composition. A vehicle generally is also mixed with the metal oxides, the low melting point glass frit and the metal oxide powder having at least two valence states to form all of the mentioned materials into a ceramic paint which can be applied to a glass surface. As discussed above, the vehicle selected depends on the mode in which the ceramic paint is to be applied. In fact, as discussed above, if the ceramic paint is to be applied in an electrostatic operation, no vehicle may be required at all.

After the ceramic paint has been applied to the glass sheet, the glass sheet is heated to a temperature which softens the glass sheet sufficiently so that the glass sheet can be formed. Generally, this temperature is in a range of 635–677°C (1175–1250°F) which is below 704°C (1300°F). After heating, the glass sheet and the ceramic paint thereon are engaged with a fiberglass covered forming die to form the heated glass sheet into a desired shape. The forming die is removed from engagement with the glass sheet and the ceramic paint thereon. The metal oxide addition to the ceramic paint is effective to prevent sticking of any of the ceramic paint to the forming die.

As stated above, it is believed that the mechanism involved is one in which the metal oxide powder along the top surface of the paint is oxidized to its higher oxidation state and thus forms a barrier between the paint and the fiberglass of the forming die which prevents sticking of the paint to the fiberglass covered forming die.

After the forming die has been removed from engagement with the glass sheet and the ceramic paint without any sticking of the ceramic paint thereto, the glass sheet may be cooled to obtain a formed glass sheet with ceramic paint thereon. Normally, the glass sheet is rapidly cooled in a glass tempering operation in order to achieve a tempered glass product having the ceramic paint thereon.

## Claims

1. A ceramic paint composition comprising a mixture of metal oxides which together act as a coloring agent for the ceramic paint and a low melting point glass frit, characterised in that said metal oxides are non reactive with one another and nonreactive with any elements or compounds they come in contact with while being heated to a temperature in a range up to 704°C and in that an additional metal oxide powder is included into the composition, said metal oxide powder having at least a low valence oxidation state and a high valence oxidation state, being in its low valence oxidation state when formed into the ceramic paint and being present in said composition in an amount of 5–25% of weight of the paint composition, said composition being formed with or without a vehicle.

2. A ceramic paint composition as claimed in Claim 1, wherein no vehicle is used when the ceramic paint composition is used in an electrostatic deposition operation.

3. A ceramic paint composition as claimed in Claim 1, comprising 8–25% by weight of said mixture of metal oxides which together act as a coloring agent for the ceramic paint, 30–50% by weight of said low melting point glass frit, 5–25% by weight of said metal oxide powder having at least a low valence oxidation state and a high valence oxidation state, said metal oxide being in its low valence oxidation state when formed into the ceramic paint, and 20–35% by weight of a vehicle mixed with said metal oxide powder having at least two valence states to form all of said mentioned materials into a ceramic paint which can be applied to a glass surface.

4. A ceramic paint composition as claimed in Claim 3, wherein said mixture of metal oxides is present in an amount of 10–20% by weight, said low melting point glass frit is present in a range of 35–45% by weight, and said metal oxide powder is present in a range of 10–20% by weight.

5. A ceramic paint composition as claimed in Claim 4, wherein said mixture of metal oxides is present in an amount of 16% by weight, said low melting point glass frit is present in an amount of 42% by weight, and wherein said metal oxide powder is present in an amount of 17% by weight.

6. A ceramic paint composition as claimed in any one of the preceding claims, wherein said metal oxide powder is stannous oxide.

## Patentansprüche

1. Keramikfarbenzusammensetzung, bestehend aus einer Mischung aus Metalloxiden, die zusammen als ein Färbemittel für die Keramikfarbe dienen und einer Glasfritte mit niedrigem Schmelzpunkt, dadurch gekennzeichnet, daß jene Metalloxide untereinander und gegenüber allen Elementen oder Verbindungen, mit denen sie beim Erhitzen auf eine Temperatur in einem Bereich von bis zu 704°C in Berührung kommen, reaktionsträge sind und ein zusätzliches Metalloxidpulver in die Zusammensetzung eingebracht wird, wobei jenes Metalloxidpulver mindestens eine niedrige Oxidationsstufe und eine hohe Oxidationsstufe aufweist und bei der Bildung zur Keramikfarbe in seiner niedrigen Oxidationsstufe vorliegt und in jener Zusammensetzung in einer Menge von 5-25 Gewichtsprozent bezüglich der Farbenzusammensetzung vorhanden ist, wobei jene Zusammensetzung mit oder ohne einen Träger hergestellt wird.

2. Keramikfarbenzusammensetzung nach Anspruch 1, dadurch gekennzeichnet, daß bei der Anwendung der Keramikfarbenzusammensetzung in einem elektrostatischen Abscheidungsverfahren kein Träger verwendet wird.

3. Keramikfarbenzusammensetzung nach Anspruch 1, bestehend aus 8-25 Gewichtsprozent jener Mischung aus Metalloxiden, die zusammen als Färbemittel für die Keramikfarbe dienen, 30-50 Gewichtsprozent jener Glasfritte mit niedrigem Schmelzpunkt, 5-25 Gewichtsprozent jenes Metalloxidpulvers mit zumindest einer niedrigen Oxidationsstufe und einer hohen Oxidationsstufe, wobei jenes Metalloxid bei der Bildung zur Keramikfarbe in seiner niedrigen Oxidationsstufe vorliegt, und 20-35 Gewichtsprozent eines Trägers, der mit jenen Metalloxiden, der Glasfritte mit niedrigem Schmelzpunkt und dem Metalloxidpulver mit mindestens zwei Oxidationsstufen zur Bildung einer Keramikfarbe aus all jenen erwähnten Materialien gemischt wird, wobei eine Glasoberfläche mit dieser Keramikfarbe beschichtet werden kann.

4. Keramikfarbenzusammensetzung nach Anspruch 3, dadurch gekennzeichnet, daß jene Mischung aus Metalloxiden in einer Menge von 10-20 Gewichtsprozent vorhanden ist, jene Glasfritte mit niedrigem Schmelzpunkt in einer Menge von 35-45 Gewichtsprozent vorhanden ist, und jenes Metalloxidpulver in einer Menge von 10-20 Gewichtsprozent vorhanden ist.

5. Keramikfarbenzusammensetzung nach Anspruch 4, dadurch gekennzeichnet, daß jene Mischung aus Metalloxiden in einer Menge von 16 Gewichtsprozent vorhanden ist, jene Glasfritte mit niedrigem Schmelzpunkt in einer Menge von 42 Gewichtsprozent vorhanden ist, und jenes Metalloxidpulver in einer Menge von 17 Gewichtsprozent vorhanden ist.

6. Keramikfarbenzusammensetzung nach einem der vorhergehenden Ansprüche, dadurch gekennzeichnet, daß jenes Metalloxidpulver Zinn(II)-Oxid ist.

## Revendications

1. Composition de peinture céramique comprenant un mélange d'oxydes métalliques qui agissent ensemble comme un agent colorant pour la peinture céramique et une fritte de verre à bas point de fusion, caractérisée par le fait que lesdits oxydes métalliques ne réagissent pas entre eux et ne réagissent avec aucun des éléments ou des composés avec lesquels ils viennent en contact lorsqu'ils sont chauffés à des températures allant jusqu'à 704°C, et par le fait qu'une poudre d'oxyde métallique additionnelle est incorporée à la composition, ladite poudre d'oxyde métallique présentant un état d'oxydation à valence faible et un état d'oxydation à valence forte, étant dans son état d'oxydation à valence faible lorsqu'elle est incorporée à la peinture céramique, et étant présente dans ladite composition en une teneur de 5 à 25% du poids de la composition de peinture, un véhicule étant incorporé ou non à ladite composition.

2. Composition de peinture céramique selon la revendication 1, dans laquelle aucun véhicule n'est utilisé lorsque la composition de peinture céramique est utilisée dans une opération de dépôt électrostatique.

3. Composition de peinture céramique selon la revendication 1, comprenant: 8 à 25% en poids dudit mélange d'oxydes métalliques qui agissent ensemble comme un agent colorant pour la peinture céramique, 30 à 50% en poids de ladite fritte de verre à bas point de fusion, 5 à 25% en poids de ladite poudre d'oxyde métallique présentant au moins un état d'oxydation à valence faible et un état d'oxydation à valence forte, ledit oxyde métallique étant dans son état d'oxydation à valence faible lorsqu'il est incorporé à la peinture céramique, et 20 à 35% en poids d'un véhicule mélangé auxdits oxydes métalliques, à ladite fritte de verre à bas point de fusion et à ladite poudre d'oxyde métallique ayant au moins deux états de valence pour former, a partir de tous lesdits matériaux mentionnés, une peinture céramique qui peut être appliquée à une surface de verre.

4. Composition de peinture céramique selon la revendication 3, dans laquelle ledit mélange d'oxydes métalliques est présent en une teneur de 10 à 20% en poids, ladite fritte de verre à bas point de fusion est présente dans une gamme de 35 à 45% en poids, et ladite poudre d'oxyde métallique est présente dans une gamme de 10 à 20% en poids.

5. Composition de peinture céramique selon la revendication 4, dans laquelle ledit mélange d'oxydes métalliques est présent en une teneur de 16% en poids, ladite fritte de verre à bas point de fusion est présente en une teneur de 42% en poids, et ladite poudre d'oxyde métallique est présente en une teneur de 17% en poids.

6. Composition de peinture céramique selon l'une quelconque des revendications précédentes, dans laquelle ladite poudre d'oxyde métallique est de l'oxyde stanneux.